# EUROPEAN PATENT APPLICATION

(11) **EP 2 566 146 A1**
(43) Date of publication of application: **06.03.2013**
(21) Application number: 12167622.5
(22) Date of filing: 11.05.2012
(51) Int. Cl.: H04N 1/00

(54) **Mobile device photo scanner**

(30) Priority: 10.04.2012 US 201213442917; 17.01.2012 US 201261587479 P; 01.09.2011 US 201161530134 P
(71) Applicant: ION Audio LLC, Cumberland, RI 02864 (US)
(72) Inventor: Durant, Jason E., Warwick, RI Rhode Island 02886 (US); Kyte, Andrew W., Providence, RI Rhode Island 02909 (US)
(74) Representative: Hofstetter, Schurack & Partner

(57) **Abstract**

A mobile device photo scanner is disclosed. The mobile device photo canner includes a cradle portion configured and arranged to hold a mobile device. The cradle has an opening therethrough configured and arranged to align with a built-in camera of the mobile device. A shroud depends from the cradle portion forming an enclosure beneath the cradle portion and centered beneath the opening, such that a user may use the built-in camera of the mobile device to scan a photograph placed within the shroud portion.

## Description

### CROSS-REFERENCE TO RELATED APPLICATIONS

This patent documents claims priority to earlier filed U.S. Provisional Application Serial No. 61/530,134, filed on September 1, 2011, and U.S. Provisional Patent Application Serial No. 61/587,479, filed on January 17, 2012, the entire contents of which are incorporated herein by reference.

### BACKGROUND OF THE INVENTION

1.Technical Field

The present patent document relates generally to scanning documents, photographs, negatives and slides, and more specifically to an apparatus for using a mobile device, such as a cellphone, with an integrated digital camera to digitally image documents, photographs, negatives and slides.

2. Background of the Related Art

Many consumers have had boxes of photographs and 35mm slides and negatives stored away in their closets and attics, without an easy way of sharing with family and friends. Now that the digital age is upon us, scanning these pictures, slides and negatives has become more common. The disadvantage of today's scanners, whether they are flatbed or specifically designed for archiving photographs, slides or negatives, is the challenge of getting the photos to where most consumers want to have them available most: their phone.

Also, as we move into the future, more and more people rely on their smart phones (such as the Apple® iPhone®) as their main device for email, social networking, and communication.

Today people use their cell phone to show photos instead of carrying them around in their wallet.Once on a cell phone, photos can be shared instantaneously in many social networking platforms at a push of a button.

Therefore, there is a need in the industry to easily transfer traditional print photographs and slides to a mobile device.

### SUMMARY OF THE INVENTION

The present invention solves the problems of the prior art by providing a mobile device photo scanner that includes

### BRIEF DESCRIPTION OF THE DRAWINGS

These and other features, aspects, and advantages of the present invention will become better understood with reference to the following description, appended claims, and accompanying drawings where:

Fig. 1 is a perspective view of a preferred embodiment of the mobile device photo scanner;

Fig. 2 is a perspective view of a preferred embodiment of the mobile device photo scanner of the present invention showing the switch for the lighting module;

Fig. 3 shows a preferred embodiments with a two-part shroud including a first section for scanning 3x5 photographs and a second section for scanning 5x7 photographs;

Fig. 4 shows an alternative embodiment configured to collapse in on itself to permit different size photos to be properly framed within the mobile device photo scanner;

Fig. 5 is a cross-section of a preferred embodiment of the mobile device photo scanner showing the interior of the lighting module;

Fig. 6 shows another alternative embodiment configured to receive film and slides for scanning;

Fig. 7 shows a translucent perspective view of yet another alternative embodiment of the photo scanner;

Fig. 8 shows a side cross-section view of the alternative embodiment shown in Fig. 7;

Fig. 9 shows a top view of the alternative embodiment shown in Fig. 7;

Fig. 10 shows a front view of the alternative embodiment shown in Fig. 7; and

Fig. 11 shows a bottom view (with the bottom cover removed) of the alternative embodiment shown in Fig. 7.

### DETAILED DESCRIPTION OF THE PREFERRED EMBODIMENTS

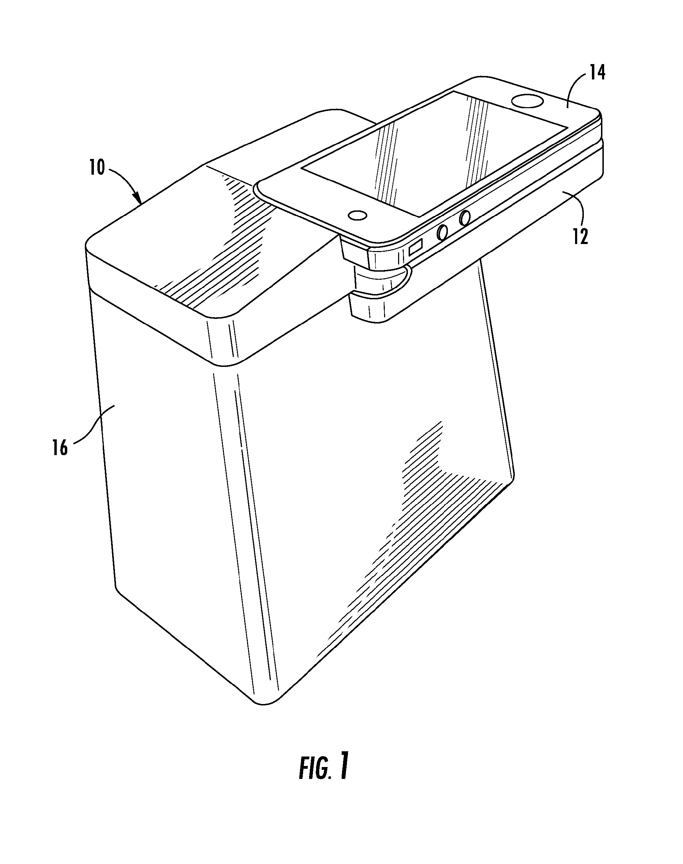

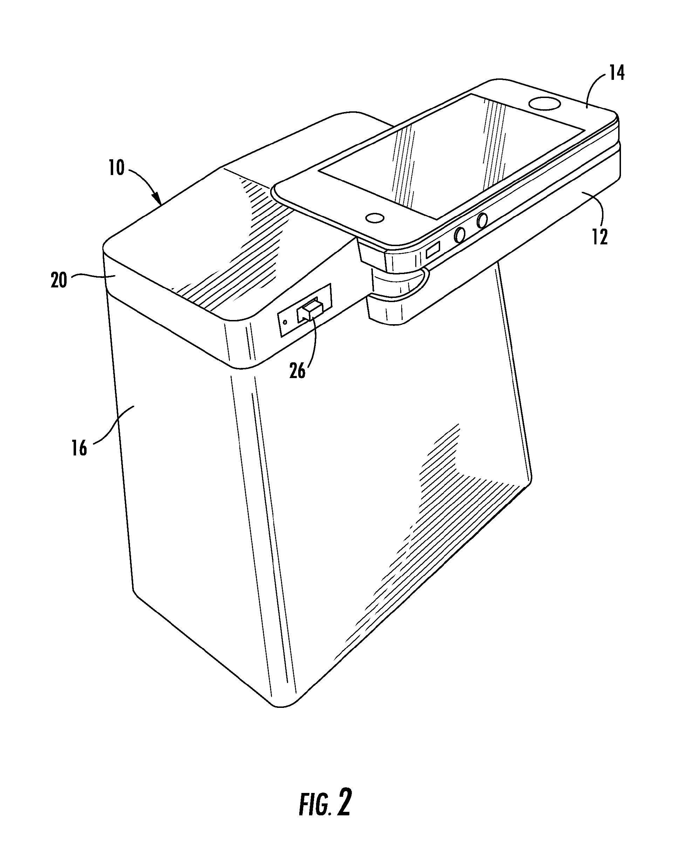

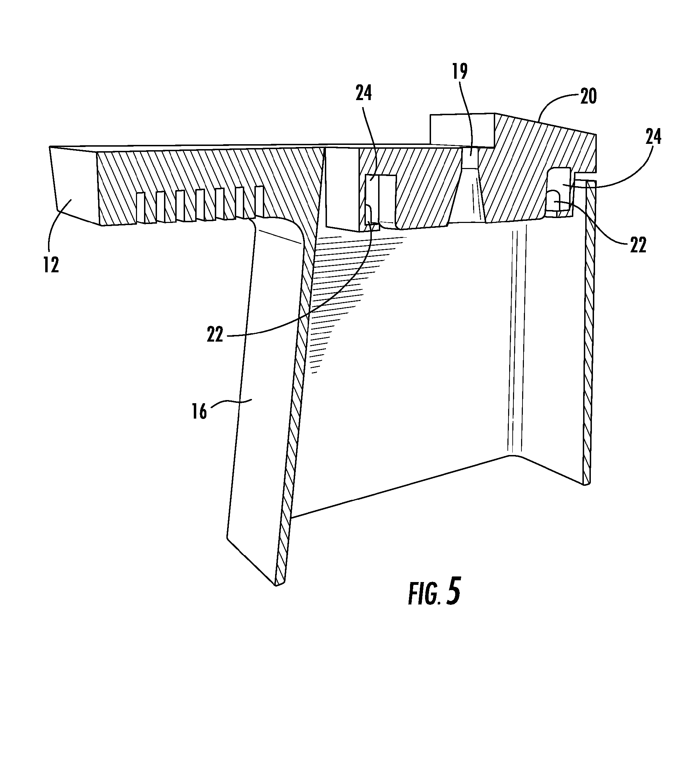

Referring now to Figs. 1 and 2, an embodiment of the mobile device photo scanner is shown generally at 10. The photo scanner 10 includes a cradle portion 12 to hold a mobile device 14, such as a camera-equipped iPhone or iPad brand mobile device, in an adjustable, but steady, position. A shroud portion 16 depends from the cradle portion 12 and flares outwardly forming an open-ended enclosure sized and dimensioned to be fit over a photograph 18 that is desired to be scanned. An opening 19 (best seen in Fig. 5) through the cradle portion 12 is positioned so the camera of the mobile device 14 points into the enclosure of the shroud portion 16 and is aimed towards the open end of the shroud portion 16. The cradle 12 is further configured to center the camera of the mobile device 14 over the shroud portion 16.

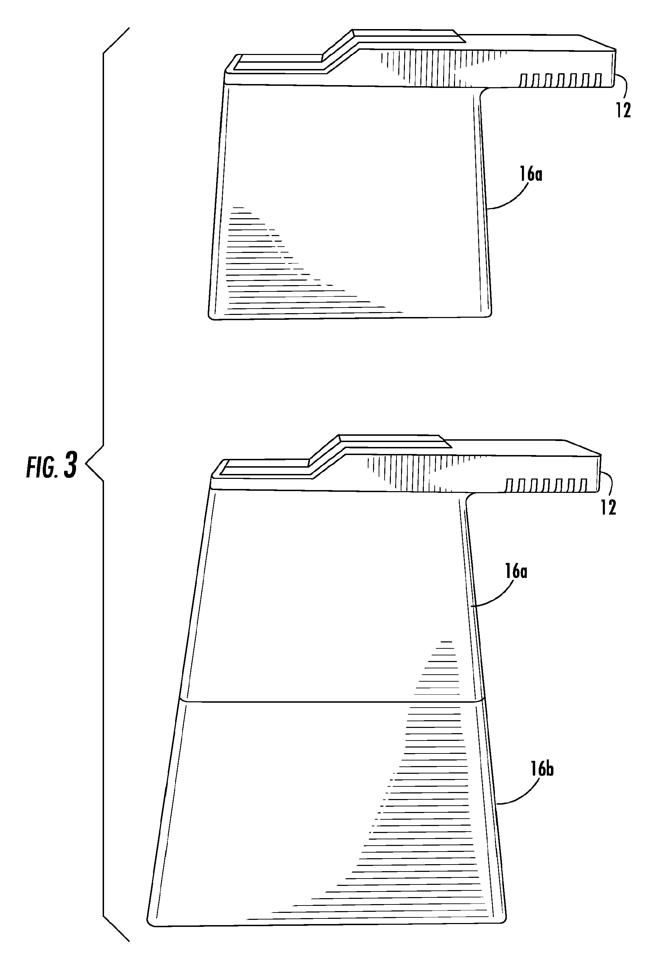

As shown in Fig. 3, the shroud portion 16 may have an opening sized and dimensioned fixed at 3x5 or 5x7 photographs. The shroud portion 16 may be split into two, stackable sections 16a, 16b. The first section 16a optimal for 3x5 photographs to be taken, with 5x7 photographs optimally taken by staking the first section 16a atop a second section 16b.

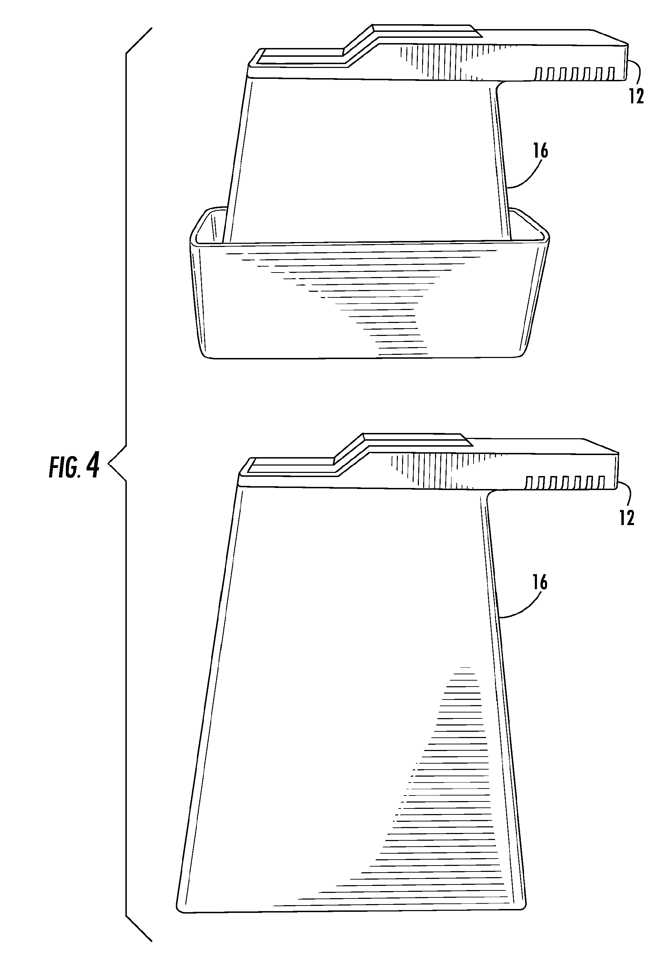

Referring to Fig. 4, the shroud portion 16 may also be configured to be collapsible. That is instead of including two or more stackable sections (as shown in Fig. 3), the shroud portion 16 may be formed of a light-weight, resilient rubber-like material that may be folded in on itself to a smaller dimension. Unfolded, the shroud portion 16 is optimal for scanning larger photographs, whereas, when folded, the shroud portion 16 is optimal for scanning smaller format photographs.

It should be understood that the embodiments shown in Figs. 3 and 4 may also have shroud portion 16 configured to optimally scan other size photographs, such as 4x6, 8x10, wallet and the like.

Referring to Fig. 5, a light module 20 is included to provide indirect lighting within the enclosure of the shroud portion 16. The light module 20 may be integrated with the cradle portion 12 or be a separate unit that attaches to the shroud portion16 and cradle portion 12. The light module 20 includes one or more lights 22 that are recessed in one or more channels 24. The channels 24 redirect light from the lights 22 towards the open end of the shroud portion 16. The use of indirect lighting reduces glare. The lights 22 may be battery powered or include an input for an external power source. A switch 26 is provided to manually turn the lights 22 on and off. Once the photo is in focus, which can be viewed on the preview screen of most mobile devices 14, the user can take a snapshot with the built-in camera on the mobile device 14.

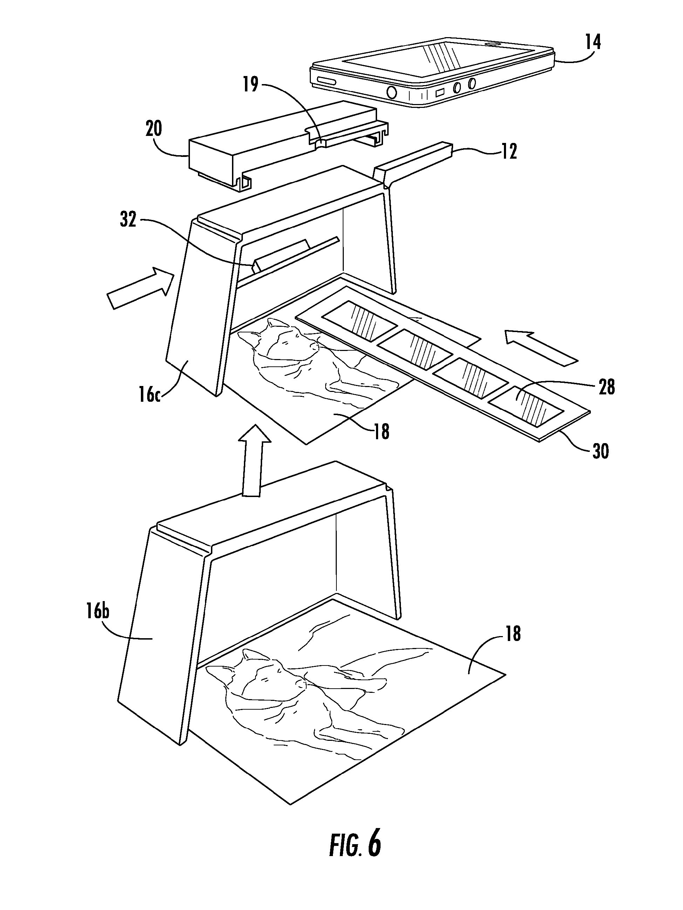

Referring to Fig. 6, the mobile device photo scanner 10 may also allow a camera-equipped mobile device14 to focus on slides and negatives 28 placed in holders 30 and slid through the shroud portion 16 in the same way. Specifically, the shroud portion 16 may include a pair of spaced apart tray openings 32 to permit a negative tray or film tray to be slid into the enclosure and positioned below the cradle portion for scanning. The shroud portion 16 enclosure includes a backlight assembly 34 to shine indirect light through the film or negative 28 for scanning.

In one embodiment, the mobile device scanner shroud portion 16 includes a third section 16c that is interchangeable with the first section 16a (described above) that includes the tray openings 32 for the tray 30 and the backlight assembly 34.

Alternatively the first section 16a of the shroud portion 16 may include fittings to hold the backlight assembly 34, which may be configured to be removable, and blanks from the tray openings 32 to permit the negative or slide holders30 to be inserted into the shroud portion 16.

Regardless, while scanning a negative 28, mobile device 14 must be configured to invert the image to its "positive". The user may use a photography software application running on the mobile device 14 to render the proper image from the negative 28 and store it.

The photo snapshot taken by the mobile device's 14 camera could be used in conjunction with a photography software application or with the native built-in camera application of the mobile device 14. Once the photo is digitally scanned on stored on the mobile device 14, the photo can be shared as the user wishes. For instance, the user could show people the photo in person on the mobile device's14 screen, or uploading to a social networking site, or send the photo via email or MMS messaging as the user desires.

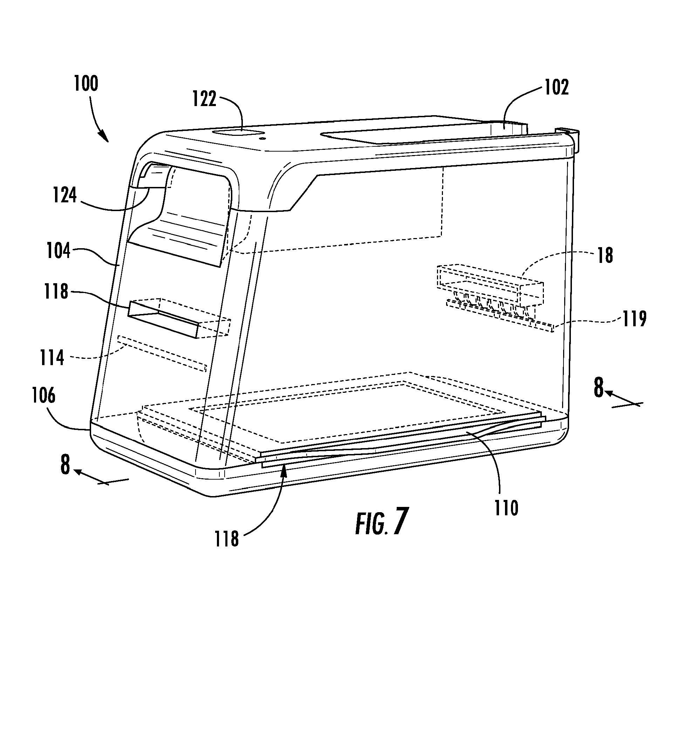

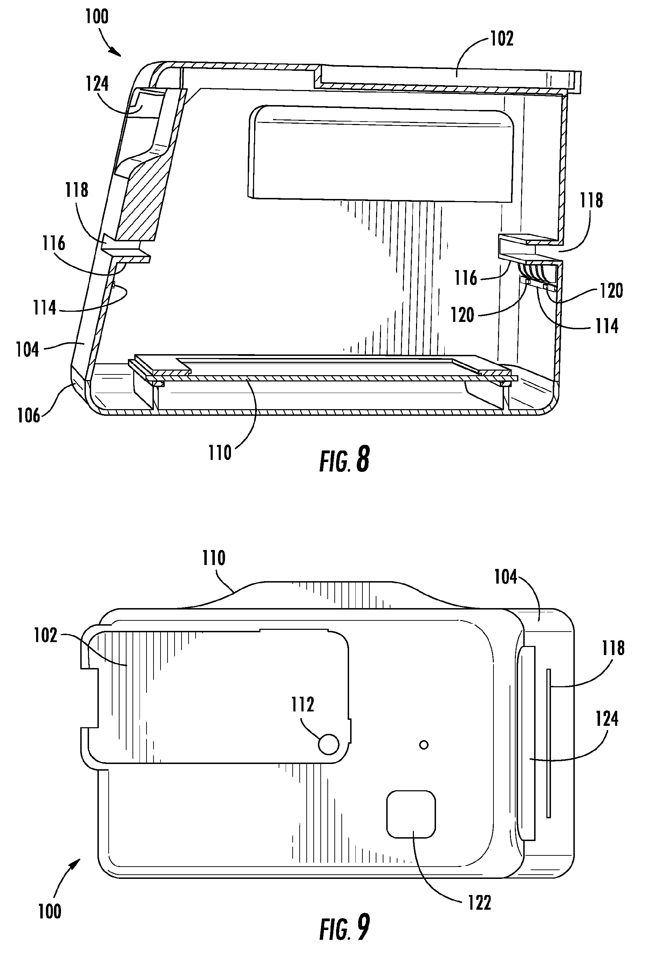

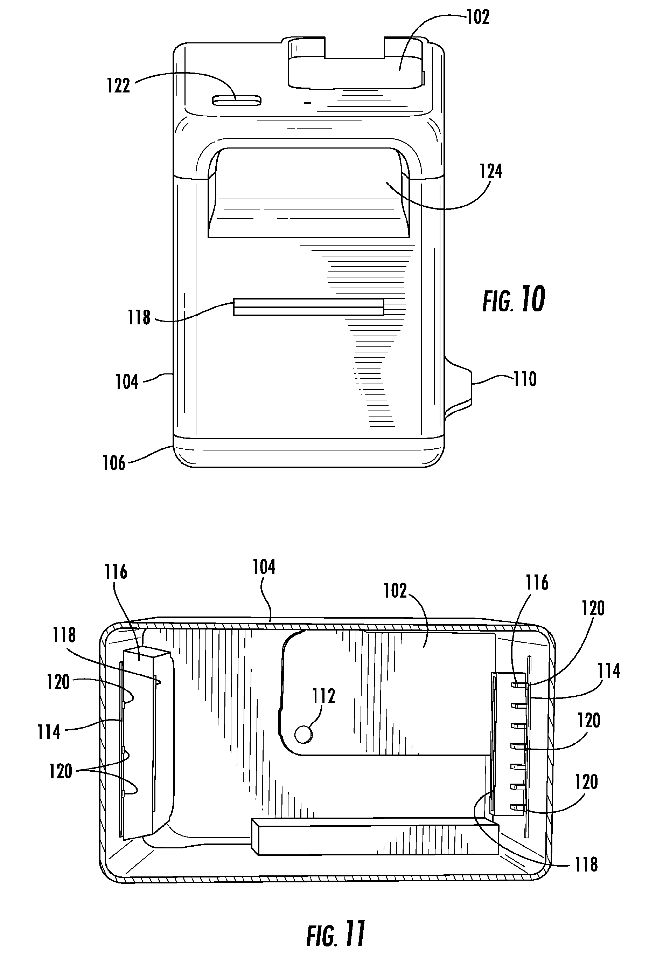

Referring now to Fig. 7-11, another alternative embodiment of the mobile device photo scanner is shown generally at 100. The photo scanner 100 includes a cradle portion 102 to hold a mobile device 14, such as a camera-equipped iPhone or iPad brand mobile device, in an adjustable, but steady, position. A shroud portion 104 depends from the cradle portion 102 and flares outwardly forming an enclosure that is closed by a bottom portion 106. A slot 108 in the side is configured to receive a slidable tray110 sized and dimensioned to hold a photograph that is desired to be scanned. An opening 112 (best seen in Figs. 9 and 11) through the cradle portion 102 is positioned so the camera of the mobile device 14 points into the enclosure of the shroud portion 104 and is aimed towards the open end of the shroud portion 102 and at the bottom portion 106. The cradle portion 102 is further configured to center the camera of the mobile device over the shroud portion 102 and onto the slidable tray 110.

Different slidable trays 110 may be used to capture 3x5 or 4x6 photographs, although the shroud portion 102 and slidable trays 110 may be enlarged to receive other sized photographs.

Referring to Figs. 8 and 11, a pair of light modules 114 is included to provide indirect lighting within the enclosure of the shroud portion 102. Each light module 114 is disposed within the shroud portion 102 below an overhang 116 to prevent direct light shining towards the camera on the mobile device 14. Specifically these light modules 114 are underneath the tray loading openings 118, described further below. Each light module 114 includes one or more lights 120. The use of indirect lighting reduces glare. The lights 120 may be battery powered or include an input for an external power source. A switch 122 is provided to manually turn the lights 120 on and off. Once the photo is in focus, which can be viewed on the preview screen of most mobile devices 14, the user can take a snapshot with the mobile device's 14 camera.

As mentioned above, the mobile device photo scanner 100 may also allow a camera-equipped mobile device 14 to focus on slides and negatives 28 placed in holders 30 and slid through the device. Specifically, the shroud portion 102 may include a pair of spaced apart tray openings 118 to permit a negative tray or film tray 30 to be slid into the enclosure and positioned below the cradle portion 102 for scanning. The light modules 114 therefore function as backlighting for the negatives or slides 28 and provide direct lighting on photographs.

The mobile device photo scanner 100 may also include a handhold 124 formed on or between the shroud portion 102 to allow the mobile device photo scanner 100 to be easily carried.

It would be appreciated by those skilled in the art that various changes and modifications can be made to the illustrated embodiments without departing from the spirit of the present invention. All such modifications and changes are intended to be within the scope of the present invention.

## Claims

1. A mobile device photo scanner, comprising:
a cradle portion configured and arranged to hold a mobile device, the cradle having an opening therethrough configured and arranged to align with a built-in camera of the mobile device; and
a shroud depending from the cradle portion forming an enclosure beneath the cradle portion and centered beneath the opening;
whereby a user may use the built-in camera of the mobile device to scan a photograph placed within the shroud portion.

2. The mobile device photo scanner of claim 1, further comprising a slidable tray configured and arranged to position a photograph in the shroud portion beneath the opening.

3. The mobile device photo scanner of claim 2, wherein the slidable tray is configured and arranged to hold a 4x6 photograph.

4. The mobile device photo scanner of claim 2, wherein the slidable tray is configured and arranged to hold a 3x5 photograph.

5. The mobile device photo scanner of claim 1, further comprising a pair of opposed tray openings configured and arranged to receive a slide and negative tray holder.

6. The mobile device photo scanner of claim 1, further comprising a light module having at least one light.

7. The mobile device photo scanner of claim 6, further comprising at least one overhang above the light.

8. The mobile device photo scanner of claim 6, further comprising a switch configured and arranged to turn the light module on and off.

9. The mobile device photo scanner of claim 1, further comprising a bottom portion connected to the shroud portion.

10. The mobile device photo scanner of claim 1, wherein the shroud portion comprises stackable sections.

11. The mobile device photo scanner of claim 1, wherein the shroud portion is collapsible.

12. The mobile device photo scanner of claim 1, further comprising a handhold formed on the shroud portion.
